# EUROPÄISCHE PATENTSCHRIFT

(11) **EP 0 756 241 B1**
(45) Veröffentlichungstag und Bekanntmachung des Hinweises auf die Patenterteilung: **04.08.2004**
(21) Anmeldenummer: 96109486.9
(22) Anmeldetag: 13.06.1996
(51) Int. Cl.: G06K 7/06, G06K 7/00

(54) **Geschirmte Kontaktiereinrichtung**
Shielded contacting device
Dispositif de contact blindé

(30) Priorität: 14.06.1995 DE 19521721
(43) Veröffentlichungstag der Anmeldung: 29.01.1997
(73) Patentinhaber: AMPHENOL-TUCHEL ELECTRONICS GmbH, D-74080 Heilbronn (DE)
(72) Erfinder: Braun, Gerhard, D-74626 Bitzfeld (DE); Reichardt, Manfred, 74189 Weinsberg (DE)
(74) Vertreter: Wagner, Karl H., Dipl.-Ing.

(56) Entgegenhaltungen:
- EP-A- 0 228 278
- EP-A- 0 476 892
- WO-A-91/15101

## Beschreibung

Die Erfindung bezieht sich auf einen Chipkarten-Leser, und zwar insbesondere einen geschirmten Chipkarten-Leser.

Es sind bereits zahlreiche Chipkarten-Leser bekannt, insbesondere auch solche, bei denen ein aus Kunststoff bestehender Deckel vorgesehen ist, in den beispielsweise eine SIM-Karte eingesetzt werden kann, um dann zusammen mit dem Deckel zur Kontaktierung auf Kontaktelemente hin verschwenkt zu werden. Vergleiche dazu beispielsweise WO 91 15101 A. Ferner zeigt die EP 0 476 892 A1 eine Kontaktiereinrichtung gemäss dem Oberbegriff des Anspruchs 1.

Der vorliegenden Erfindung liegt die Aufgabe zugrunde, die Nachteile des Standes der Technik zu vermeiden. Insbesondere beabsichtigt die Erfindung, einen Chipkarten-Leser vorzusehen, der eine kostengünstige Schirmung gemäß den EMV-Forderungen ermöglichst.

Zur Lösung dieser Aufgabe wird ganz allgemein ein aus Metall bestehender Deckel vorgesehen. Dabei wird ein geschlossener Metalldeckel zur Schirmkontaktierung derart verwendet, daß eine sichere Verbindung zur Erde hergestellt wird. Vorzugsweise ist der Metalldeckel gemäß der an sich bekannten Klapp-Schiebe-Mechanik ausgebildet.

Obwohl der Klapp-Schiebe-Deckel vorzugsweise als Stanz-Biege-Teil aus Metall gefertigt ist, wobei der Schirmanschluß direkt am Deckel erfolgt, kann gemäß einer anderen bevorzugten Ausbildung der Klapp-Schiebe-Deckel auch aus einem metallisierten Kunststoff oder aus einem leitenden Kunststoff hergestellt sein.

Erfindungsgemäß erfolgt die Schirmung des Chipkarten-Lesers durch den geschlossenen Metalldeckel, wobei die Schirmkontaktierung vorzugsweise innerhalb der Kartenkontur oder aber auch außerhalb der Kartenkontur erfolgt.

Erfindungsgemäß erfolgt die Kontaktierung zur Herstellung einer Verbindung vom Deckel zur Erde über zusätzliche, vorzugsweise den Lesekontakten entsprechende Kontaktelemente, die vorzugsweise im Kontaktträger des auch die Lesekontakte oder die Lesekontaktelemente tragenden Kontaktträgers vorgesehen sind. Auf diese Weise wird die Schirmung bzw. die Erdung des Deckels ohne zusätzliche neue Teile und/oder zusätzliche Arbeitsgänge oder Fertigungsverfahren erreicht. Das heißt, es sind keine speziellen Schirmkontakte, Schirmfolien oder metallisierte Kunststoffdeckel erforderlich, da die Kontaktierung vom Deckel zur Platine über die zusätzlichen oder speziell vorgesehenen Lesekontakte erfolgt. Dabei ist es möglich, die Anzahl der Kontaktstellen zu variieren, wobei beispielsweise 1 bis 4 Kontaktstellen vorgesehen sind.

Zur Lösung der genannten Aufgabe sieht die Erfindung die in Anspruch 1 genannten Maßnahmen vor. Bevorzugte Ausgestaltungen der Erfindung sind in den Unteransprüchen und der folgenden Beschreibung angegeben.

Durch die Erfindung werden spezielle Kontaktstellen zwischen dem Deckel und einem Telefongehäuse nicht notwendig. Das erfindungsgemäße Kontaktprinzip kann darüber hinaus auch als Kartenanwesenheitsschalter verwendet werden. Ferner ist der erfindungsgemäße Chipkarten-Leser ohne Zusatzbauteile für das Pick- und Place-Verfahren einsatzbereit, da der Deckel im verriegelten Zustand genügend Platz bzw. Oberfläche vorsieht, um ein Ansaugen des gesamten Chipkarten-Lesers durch Montagegeräte zu ermöglichen.

Die reduzierte Kontaktkraft der Schirmkontakte führt beim SMD-Löten zur Vermeidung von Kontaktkraftverlusten durch die Wärmebelastung des Formstoffs während des Lötprozesses. Die Klapp-Schiebe-Mechanik am Deckel/Kontaktträger kann ohne Schieber gefertigt werden.

Vorteilhaft ist ferner, daß der Deckel im aufgeklappten Zustand nicht verschoben werden kann. Gemäß einer bevorzugten Ausgestaltung der Erfindung kann der Öffnungswinkel zwischen dem Deckel und dem Kontaktträger auf unterschiedliche Werte begrenzt werden. Erfindungsgsemäß wird die Karte im Deckel durch Reibschluß gehalten. Der Deckel selbst bleibt nach dem Entriegeln in jedem Öffnungswinkel zum Kartenstecken bzw. zur Kartenentnahme durch Reibschluß stehen. Ein Verriegeln des Metalldeckels bei falschgesteckter Karte ist nicht möglich. Das erfindungsgemäße Gesamtkonzept des Chipkarten-Lesers erlaubt die Bestückung der Platine unterhalb des Lesers, ohne die Schirmung zu beeinflussen.

Erfindungsgemäß erfolgt also die Schirmung bei geschlossenem Metalldeckel, der direkt oder indirekt mit der Gehäuseschirmung oder Platine elektrisch leitend verbunden wird und die komplette Kartenkontur zudeckt und so abschirmt.

Die erfindungsgemäß vorgesehenen Kontaktelemente, insbesondere auch die sogenannten Schirmkontakte sind selbstreinigend. Wie bereits erwähnt, kann die Schirmung auch mit Deckeln bzw. Abdeckungen nicht nur aus Metall, sondern auch aus Metallkunststoffverbund, leitfähigem Kunststoff oder metallisiertem Kunststoff erfolgen.

Erfindungsgemäß wird der Deckel auf dem Kontaktträger lösbar oder unlösbar eingerastet. Die dabei vorzugsweise verwendete Klapp-Schiebe-Mechanik besteht aus starren Achsmitteln und beweglichen Gegenlagermitteln. Die Kartenfixierung erfolgt im Lesezustand in axialer Richtung durch Rippen am Kontaktträger, wobei eine Rippe eine Polarisierungsschräge aufweist und vorzugsweise mittels eines Arms mit dem Kartgenträger verbunden ist. Die Kartenfixierung oder -führung in Querrichtung ist vorzugsweise am Deckel ausgeformt. Insgesamt besteht die vollständige Kontaktiereinrichtung mit Schirmung aus lediglich drei unterschiedlichen Teilen, nämlich dem Kontaktträger aus Formstoff, dem Deckel und den Kontakten.

Weitere Vorteile, Ziele und Einzelheiten der Erfindung ergeben sich aus der Beschreibung von Ausführungsbeispielen anhand der Zeichnung; in der Zeichnung zeigt:
Fig. 1 eine Draufsicht auf einen Chipkartenleser gemäß der Erfindung;
Fig. 2 eine Ansicht des Chipkartenlesers der Fig. 1 aus Richtung des Pfeiles A;
Fig. 3 eine Draufsicht auf den erfindungsgemäßen Kontaktträger des erfindungsgemäßen Chipkartenlesers der Fig. 1;
Fig. 4 eine Ansicht des Kontaktträgers der Fig. 3 aus Richtung des Pfeils B;
Fig. 5 eine Draufsicht auf eine Abdeckung oder einen Dekkel des Chipkartenlesers gemäß Fig. 1;
Fig. 6 eine Seitenansicht des Deckels der Fig. 5 aus Richtung des Pfeils C; und
Fig. 7 eine Ansicht des Deckels der Fig. 6 aus Richtung des Pfeiles D.

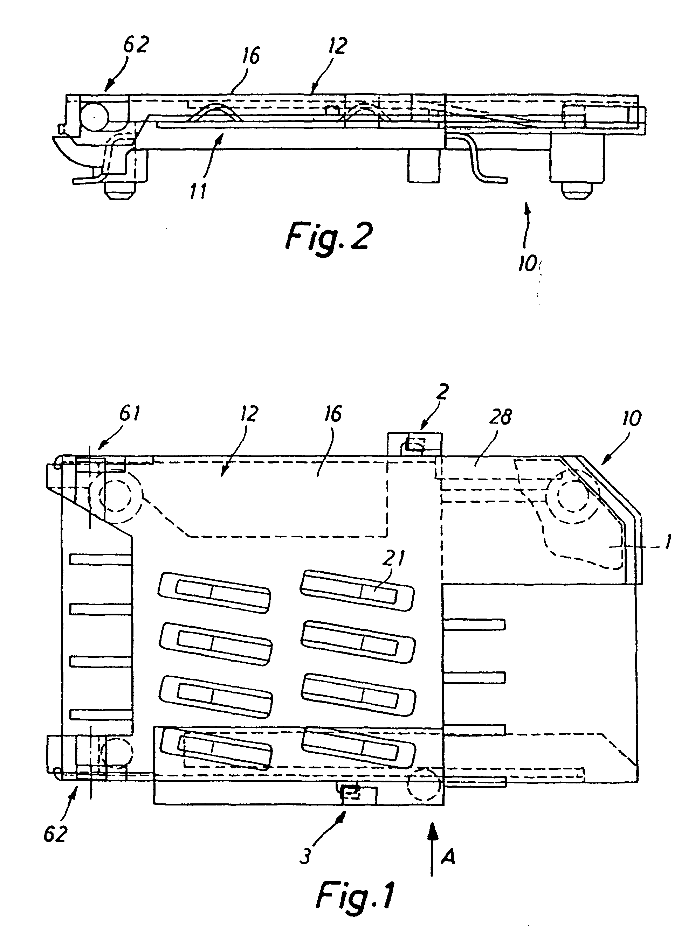

In den Fig. 1 und 2 ist der erfindungsgemäße Chipkartenleser dargestellt, wobei es sich im dargestellten Ausführungsbeispiel speziell um einen SIM-Kartenleser 10 handelt. Der SIM-Kartenleser weist einen Kontaktträger oder einen Rahmen 11 auf sowie einen daran angeordneten Deckel 12. Vorzugsweise ist der Deckel 12 ein Klapp-Schiebedeckel, der vorzugsweise wiederum aus Metall besteht.

In der Darstellung gemäß den Fig. 1 und 2 ist die Verriegelung des Deckels 12 am Kontaktträger 11 ohne SIM-Karte dargestellt, um aber die Lage der SIM-Karte 1 dennoch zu verdeutlichen, ist in Fig. 1 gestrichelt ein Teil der SIM-Karte 1 zu sehen.

In den Fig. 1 und 2 befindet sich der SIM-Kartenleser 10 in einem Verriegelungszustand, den er - vorzugsweise ohne Karte 1 - insbesondere dann einnehmen kann, wenn er zum Versand gebracht wird, oder wenn er beispielsweise auf eine gedruckte Schaltungsplatte durch Montagemittel aufgesetzt wird. Der Verriegelungszustand wird auch dann eingenommen, wenn die Karte eingesetzt und in Kontakt mit den Kontaktelementen des SIM-Kartenlesers gebracht werden soll. Aus den in Fig. 1 und 2 gezeigten Schließ- oder Leseposition kann der Deckel 12, nachdem er in Fig. 2 nach links verschoben und somit entriegelt wurde, verschwenkt werden, wobei der Deckel bei dieser Schwenkbewegung durch Anlenkmittel 61, 62 geführt ist.

In der Verriegelungslage gemäß Fig. 1 und 2 bietet die Oberseite 16 des Deckels ausreichend Fläche, um es einem automatischen Montiergerät zu ermöglichen den SIM-Kartenleser 10 insgesamt beispielsweise durch Saugknöpfe zu erfassen.

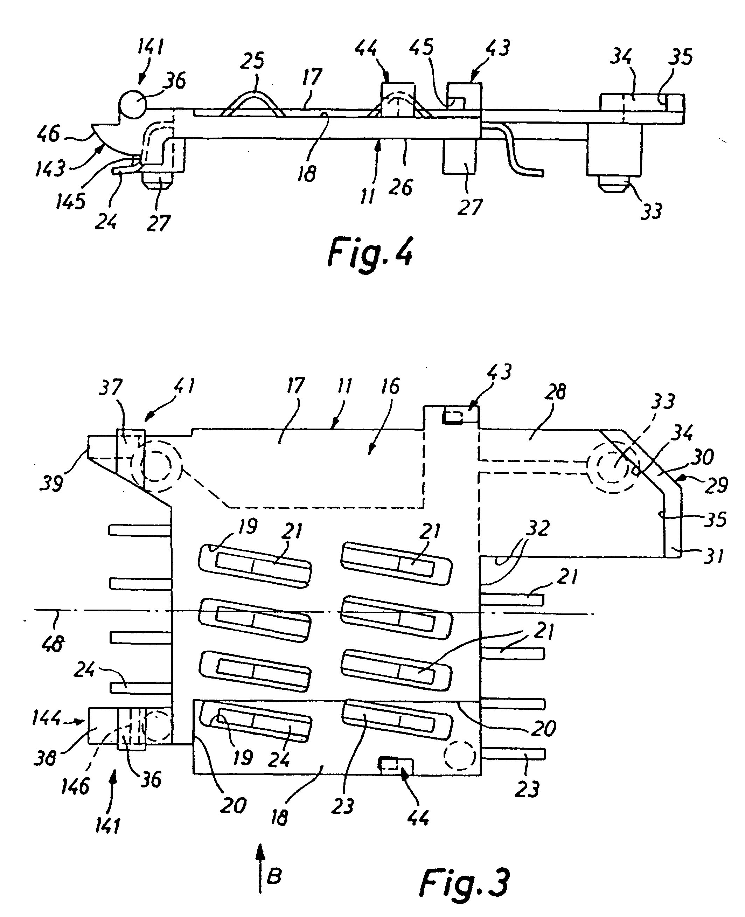

Die Fig. 3 und 4 veranschaulichen den Kontaktträger 11 im einzelnen. Man erkennt, daß die Oberfläche oder Oberseite 16 des Kontaktträgers 11 abgestuft ausgebildet ist, d. h. es ist eine größere Oberfläche auf höherem Niveau und eine etwas herabgesetzte Oberfläche 18 auf niederem Niveau vorgesehen. Kannten 20 begrenzen die Oberfläche 18. In der Oberfläche 16 sind Aushebungen 19 ausgebildet durch die hindurch Lesekontaktelemente 21 nach oben (Fig. 4) ragen können, und ebenso Erd- oder Massekontakte 23, 24 die auch als Schaltkontaktelemente bezeichnet werden können. Wie noch näher zu erläutern sein wird, erstellen diese Massekontakte 23, 24 bei Berührung mit dem Deckel 12 die Verbindung zur Erde oder Masse her. Die Kontaktelemente, und zwar sowohl die Lesekontaktelemente 21 als auch die Schaltkontaktelemente 23 haben vorzugsweise Kuppen 25 und bilden so Kontaktstellen zur Zusammenarbeit entweder mit den Kontakten der SIM-Karte oder eben dem Deckel 12.

Der Kontaktträger 11 weist eine Unterseite 26 auf, an der Befestigungsstifte 27 vorgesehen sind, die beispielsweise in eine gedruckte Schaltungsplatte eingesetzt werden können. Der Kontaktträger 11 bildet einen Vorsprung 28. Vorzugsweise ist der Kontaktträger 11 insgesamt aus einem Kunst- oder Formstoff beispielsweise durch Spritzguß ausgeformt.

Ebenfalls ausgeformt sind an der Zunge 28 Rippenmittel 29, die im einzelnen eine Schräg- oder Polerisationsrippe 30 sowie eine Querrippe 31 aufweisen. Durch die Zunge 28 wird so praktisch ein Ausschnitt oder Freiraum für die SMT-Anschlußenden 32 gebildet, in den hinein die Anschlußenden einiger der Kontaktelemente 21, 23 ragen. Ferner ist an der Zunge 28 ein Befestigungsstift 33 ähnlich wie die Befestigungsstifte 27 ausgeformt. Die Polerisationsrippe 30 bildet eine Polerisationsschräge 34 für die Anlage der SIM-Karte 1. Die Querrippe 31 bildet ebenfalls eine Anlagefläche 35 für die SIM-Karte 1.

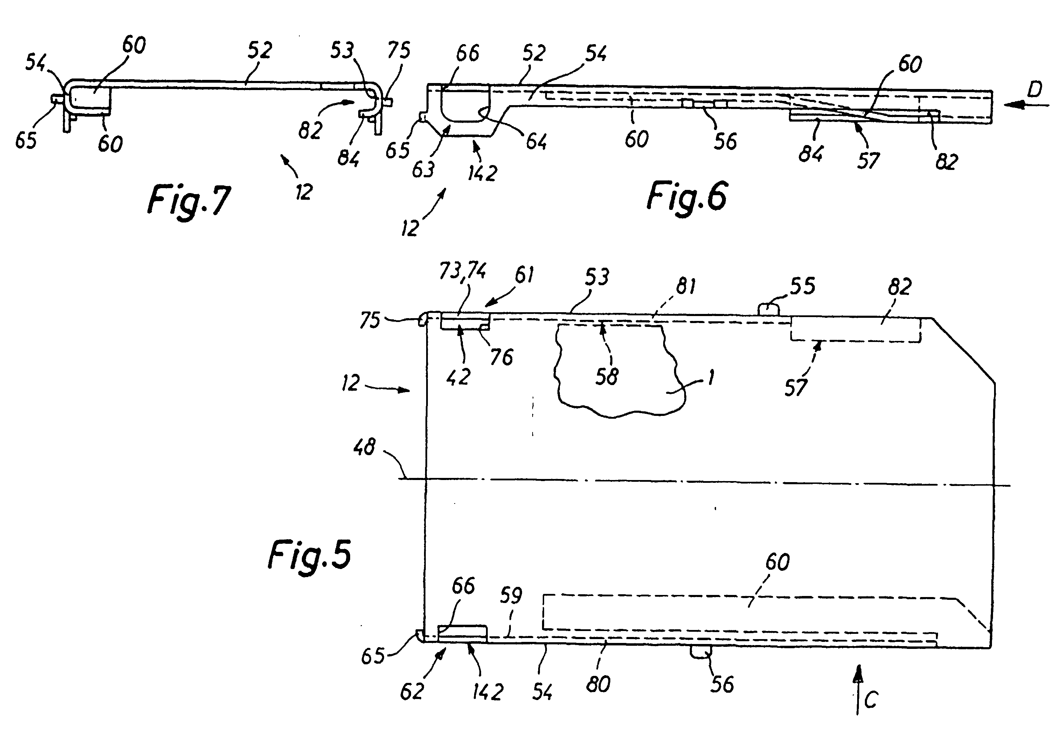

Die in Bezugnahme auf Fig. 1 und 2 bereits erwähnten Anlenkmittel 61, 62 werden durch erste oder stationäre Schwenk-Lagemittel 41, 141 vom Kontaktträger 11 gebildet und durch noch unter Bezugnahme auf die Fig. 5 bis 7 zu beschreibende zweite oder bewegliche Schwenk-Lagemittel 42, 142 gebildet. Im einzelnen weisen die ersten Schwenk-Lagemittel 41, 141 jeweils einen Schwenkzapfen 36, 37 auf, die vorzugsweise an den dargestellten Verlängerungen 38, 39 des Kontaktträgers 11 vorzugsweise zusammen mit dem Kontaktträger ausgeformt sind.

Die ersten Schwenk-Lagemittel 41, 141 weisen ferner Schwenk-Führungsmittel 143, 144 auf sowie Schwenk-Anschläge 145 und 146.

Die bereits erwähnten Verriegelungsmittel 2, 3 weisen am Kontaktträger 11 stationäre Rast- oder Befestigungsmittel 43, 44 auf, die mit entsprechenden beweglichen noch zu beschreibenden Gegenrastmitteln in der Form von Vorsprüngen 55, 56 des Deckels 12 zusammenarbeiten können.

In der Draufsicht der Fig. 3 erkennt man ferner, daß die Kontaktelemente vorzugsweise unter einem geringen Winkel schräg gegenüber einer Längsachse 48 des Kontaktträgers 11 verlaufen.

Es sei nunmehr auf die Fig. 6 bis 8 bezuggenommen, die in Fig. 5 bis 7 den Deckel 12 fertigen und Fig. 8 in der Form einer Deckelabwicklung 120 zeigen.

Der Deckel 12 besitzt eine obere Wand 52 sowie eine ersten Seitenwand 53 und eine zweite Seitenwand 54. Mit Abstand gegenüber den am einen in der Fig. 5 linken Ende des Deckels 11 angeordneten Anlenkmittel 61, 62 sind die Gegenrastmittel in der Form von Vorsprüngen 55, 56 vorgesehen. Ferner werden durch umgebogene Blechteile erste Führungs- oder Aufnahmemittel 57, zweite Führungs- oder Aufnahmemittel 58, dritte Führungs- oder Aufnahmemittel 59 gebildet. Diese Führungsmittel 57 und auch 60 sind kanalförmig wie in Fig. 7 gezeigt und dienen zur Aufnahme der SIM-Karte. Eine Andrückfeder oder Kontaktzunge 60 wird ebenfalls vorzugsweise einstückig aus dem Deckelmaterial gebildet, wobei die Andrückfeder 60 wie in Fig. 6 gezeigt nach oben gegen die Unterseite der oberen Wand 52 gedrückt ist und an diese möglichst federnd anliegt. Beim Einschieben der SIM-Karte in Fig. 5 und 6 von rechts her in die durch die Führungsmittel 57 bis 59 gebildeten Kanäle wird dann die Andruckfeder 60 nach unten gedrückt und kontaktiert nach Verschieben und Schließen des Deckels die Schaltkontakte 23, 24.

Die Anlenkmittel 61, 62 weisen jeweils ein Sichelteil 63 bzw. 73 auf, wobei dieser Teil eine Ausnehmung 64 bzw. 74 bildet. Ferner sind noch näher zu beschreibende Lappen 65 und 75 vorzugsweise einstückig mit dem Deckel 11 vorgesehen.

Genauer gesagt bilden die ersten Führungsmittel 57 einen Aufnahmeschlitz 82. Die zweiten Führungsmittel 58 bilden eine seitliche Führung und die dritten Führungsmittel 59 bilden ebenfalls eine seitliche Führung.

Vorzugsweise sind sämtliche Kontaktelemente sowohl die Lesekontaktelemente als auch die Schalt- oder Massekontaktelemente nicht vorgespannt, sie haben also gegenüber vorgespannte Kontaktelementen einen größeren Federweg. Wie erwähnt, wird die zungenförmige Andruckfeder 60, die sich in Richtung der Längsachse 48 erstreckt, und zwar über eine Länge, die größer ist als die halbe Länge elastisch hochgebogen, um dann beim Zusammenbau des Deckels 11 mit dem Kontaktträger die gewünschte Federkraft auszuüben. Durch die Konstruktion ist sichergestellt, daß die Kontakte beim Einlöten nicht belastet sind.

Die ersten oder stationären Schwenk-Lagemittel 41, 141 sind mit den bereits erwähnten Schwenk-Führungsmittel 143, 144 in der Form einer Rundung ausgestattet, die dazu dient, bei der Schwenkbewegung des Deckels mit den am Deckel ausgebildeten Führungslappen 65, 75 zusammenzuarbeiten.

Die maximale Schwenköffnungsposition wird durch die Schwenkanschläge 145, 146 definiert. Diese Schwenkanschläge 145, 146 können entsprechend der gewünschten Schwenköffnungsstellung auch in einer anderen als der gezeigten Position beispielsweise in Fig. 4 nach links entlang der Rundung verschoben vorgesehen sein.

In der in Fig. 1 und 2 gezeigten verriegelten Position des SIM-Kartenlesers bzw. des Deckels sind also die Verriegelungsmittel 2, 3 in Eingriff, d. h. die Vorsprünge 55, 56 sind in Aufnahmen 45 an den Befestigungsmitteln 43, 44 eingesetzt und halten durch Klemmkraft. Wenn man nach dem Einbau des SIM-Kartenlesers 10 der Fig. 1 und 2 in ein Gerät eine SIM-Karte einsetzten möchte, so schiebt man den Deckel 12 wie gesehen in Fig. 1 und 2 nach links, bis man den Deckel 2 - vgl. Fig. 2 - nach links oben verschwenken kann. Sodann setzt man die SIM-Karte in den Deckel ein, bis diese an den Zapfen 36 und 37 einen Anschlag findet, wobei das Einsetzen entgegen der durch die Zunge oder Andruckfeder 60 ausgeübten Kraft erfolgt. Sodann verschwenkt man den Deckel in Fig. 2 im Uhrzeigersinn, bis die SIM-Karte an den Rippenmittel 29 zum Anschlag kommt, genauer gesagt an der Polarisationsschräge 34 und der Anlagefläche 35. Wenn die Karte nicht richtig eingesetzt ist, kann man den Deckel nicht schließen. Nachdem also der Deckel nach unten gegen den Kontaktträger verschwenkt und gedrückt ist, schiebt man den Deckel 12 nach rechts, wobei die SIM-Karte in Anlage an den Flächen 34, 35 verbleibt. Die Vorsprünge 55, 56 verrasten dann wieder an den Befestigungsmitteln 43, 44.

## Patentansprüche

1. Kontaktiereinrichtung für eine Chipkarte, insbesondere eine SIM-Karte, wobei folgendes vorgesehen ist: ein Kontakträger (11), ein Metalldeckel (12), Lesekontaktelemente (21), angeordnet im Kontaktträger (11), **dadurch gekennzeichnet dass** Schalt- oder Massekontaktelemente (23,24), ebenfalls angeordnet im Kontaktträger (11), und eine im Deckel (12) gebildete Andruckfeder (60) zur Kontaktierung und Verbindung des Metalldeckels (12) über die Schalt- und Massekontaktelemente mit Erde weiter vorgesehen sind, wobei die Andruckfeder (60) durch Einfügen einer SIM-Karte in die Kontaktiereinheit gegen die Massekontaktelemente gedrückt wird, um eine elektrische Verbindung des Deckels (12) mit Erde zu realisieren.

2. Einrichtung nach Anspruch 1, wobei ein aus leitendem Kunststoff oder metallisiertem Kunststoff bestehender Deckel (12) an Stelle das Metalldeckels verwendet wird.

3. Einrichtung nach Anspruch 1, **dadurch gekennzeichnet, daß** die Schirmung durch den geschlossenen Metalldeckel (12) erfolgt, und daß vorzugsweise die Schirmkontaktierung innerhalb, gegebenenfalls aber auch außerhalb, der Kartenkontur erfolgt.

4. Einrichtung nach einem der vorhergehenden Ansprüche, **dadurch gekennzeichnet, daß** die Karte im Deckel durch Reibschluß gehalten ist.

5. Einrichtung nach einem der vorhergehenden Ansprüche, **dadurch gekennzeichnet, daß** Anlenkmittel (61,62) derart ausgebildet sind, daß der Deckel nach seinem Entriegeln in jedem Öffnungswinkel zum Zwecke des Kartensteckens oder Kartenentnehmens durch Reibschluß stehenbleibt, durch Kooperation der Lappen (65, 75) und der Rundung (143, 144).

6. Einrichtung nach einem der vorhergehenden Ansprüche, **dadurch gekennzeichnet, daß** Mittel vorgesehen sind, die das Verriegeln des Deckels bei falschgesteckter Karte unmöglich machen.

7. Einrichtung nach einem der vorhergehenden Ansprüche, **dadurch gekennzeichnet, daß** die Kartenfixierung im Lesezustand in axialer Richtung, d.h. in Richtung der Längsachse (48) durch Rippenmittel (29) und Zapfen (36, 37) erfolgt.

8. Einrichtung nach Anspruch 7, **dadurch gekennzeichnet, daß** die Rippenmittel eine Polarisierungsschräge (34) aufweisen, die mittels einer Zunge (28) mit dem Kontaktträger (11) verbunden ist.

9. Einrichtung nach einem der vorhergehenden Ansprüche, **dadurch gekennzeichnet, daß** am Deckel eine Kartenfixierung in Querrichtung, d.h. quer zur Längsachse (48) ausgeformt ist.

10. Einrichtung nach einem der vorhergehenden Ansprüche, **dadurch gekennzeichnet, daß** entlang der seitlichen Längskanten Führungen vorgesehen sind.

11. Einrichtung nach einem der vorhergehenden Ansprüche, **dadurch gekennzeichnet, daß** die Andrückfeder (60) vorzugsweise nach oben (Fig. 6) gedrückt ist und durch die SIM-Karte nach unten gegen die Massekontakte (23,24) gedrückt wird, um den Deckel nach dessen Verschiebung mit Erde zu verbinden.

12. Einrichtung nach einem der vorhergehenden Ansprüche, **dadurch gekennzeichnet, daß** die Lese- und Masse-Kontakte stationär in Kontaktträger angeordnet sind.

13. Einrichtung nach einem der vorhergehenden Ansprüche, **dadurch gekennzeichnet, daß** der Deckel Mittel zur Aufnahme und Halterung der Karte hat und so die Karte beim Verschwenken des Deckels hält.

## Claims

1. A contacting apparatus for a chip card, in particular for a SIM card, that contacting apparatus comprising:
a contact support (11),
a metal cover (12),
reading contact elements (21), provided in said contact support (11),
**characterized by**
switching or ground contact elements (23, 24) also provided in said contact support (11), and
a pressing spring (60) formed in said cover (12) for contacting and connecting the metal cover (12) via said switching and ground contact elements with ground, wherein
said pressing spring (60) is pressed by the insertion of a SIM card into said contacting unit against the ground contact elements so as to realize an electric connection of the cover (12) with ground.

2. The apparatus of claim 1, wherein a cover made of conductive plastic material or metalized plastic material is used instead of the metal cover.

3. The apparatus of claim 1, **characterized in that** the shielding occurs by the closed metal cover (12) and the shield contacting occurs preferably within the contour of the card but possibly also outside thereof.

4. The apparatus according to one of the preceding claims, **characterized in that** the card is held in the cover by a frictional fitting.

5. The apparatus according to one of the preceding claims, **characterized in that** link means (61, 62) are designed such that the cover after being delocked, remains due to a frictional contact provided by the cooperation of projections (65, 75) and a round shape (143, 144) in any angular opening position so as to allow insertion and removal of a card.

6. The apparatus according to one of the preceding claims, **characterized in that** means are provided which make it impossible to lock the cover if the card is improperly inserted.

7. The apparatus according to one of the preceding claims, **characterized in that** the card is fixedly located in the reading condition in axial direction, i.e. in the direction of the longitudinal axis (48) by rib means (29) and pins (76, 37).

8. The apparatus of claim 7, **characterized in that** said rib means comprise a polarization incline (34) which is connected by means of a tongue (28) with the contact support (11 ).

9. The apparatus according to one of the preceding claims, **characterized in that** the cover is provided with card fixing means in transversal direction, i.e. crosswise with respect to the longitudinal axis (48).

10. The apparatus according to one of the preceding claims, **characterized in that** guide means are provided along the lateral longitudinal edges.

11. The apparatus according to one of the preceding claims, **characterized in that** the pressing spring (60) is preferably pushed upwardly (Fig. 6) and is pressed by means of the SIM card downwardly against the ground contacts (23, 24) so as to connect the cover after its sliding movement with ground.

12. The apparatus according to one of the preceding claims, **characterized in that** the reading contacts and the ground contacts are located stationarily in the contact support.

13. The apparatus according to one of the preceding claims, **characterized in that** the cover is provided with means for receiving and supporting the card so as to hold the card during pivotable movement of the cover.

## Revendications

1. Dispositif de mise en contact pour une carte à puce, en particulier une carte SIM, dans lequel sont prévus les éléments suivants : un support de contact (11), un couvercle métallique (12), des éléments de contact de lecture (21), agencés dans le support de contact (11), **caractérisé en ce que** des éléments de mise en circuit ou de contact à la masse (23, 24), également agencés dans le support de contact (11), et un ressort de compression (60) formé dans le couvercle (12), sont en outre prévus pour mettre en contact et relier le couvercle métallique (12) à la terre via les éléments de mise en circuit et de contact, le ressort de compression (60) étant pressé contre les éléments de contact à la masse en insérant une carte SIM dans l'unité de mise en contact, pour réaliser une liaison électrique du couvercle (12) avec la terre.

2. Dispositif selon la revendication 1, dans lequel un couvercle (12) se composant de matière plastique conductrice ou de matière plastique métallisée est utilisé à la place du couvercle métallique.

3. Dispositif selon la revendication 1, **caractérisé en ce que** le blindage est exécuté par le couvercle métallique fermé (12) et la mise à contact du blindage est exécutée de préférence dans le contour de carte, mais le cas échéant aussi à l'extérieur dudit contour.

4. Dispositif selon l'une des revendications précédentes, **caractérisé en ce que** la carte est maintenue dans le couvercle par coopération de friction.

5. Dispositif selon l'une des revendications précédentes, **caractérisé en ce que** les moyens de montage articulé (61, 62) sont réalisés de sorte que le couvercle reste, après son déverrouillage, dans chaque angle d'ouverture par coopération de friction, via la coopération des pattes (65, 75) et de l'arrondi (143, 144), dans le but d'insérer ou de retirer la carte.

6. Dispositif selon l'une des revendications précédentes, **caractérisé en ce qu'**il est prévu des moyens qui rendent impossible le verrouillage du couvercle lorsque la carte est mal insérée.

7. Dispositif selon l'une des revendications précédentes, **caractérisé en ce que** la fixation de la carte est réalisée dans l'état de lecture en direction axiale, c'est-à-dire en direction de l'axe longitudinal (48) par des moyens formant nervures (29) et par des tenons (36, 37).

8. Dispositif selon la revendication 7, **caractérisé en ce que** les moyens formant nervures présentent une inclinaison de polarisation (34) qui est reliée au support de contact (11) à l'aide d'une languette (28).

9. Dispositif selon l'une des revendications précédentes, **caractérisé en ce qu'**une fixation de carte est ménagée sur le couvercle en direction transversale, c'est-à-dire perpendiculairement à l'axe longitudinal (48).

10. Dispositif selon l'une des revendications précédentes, **caractérisé en ce que** des guidages sont prévus le long des arêtes longitudinales latérales.

11. Dispositif selon l'une des revendications précédentes, **caractérisé en ce que** le ressort de compression (60) est pressé de préférence vers le haut (figure 6) et est pressé par la carte SIM vers le bas contre les contacts à la masse (23, 24), pour relier le couvercle à la terre après sa translation.

12. Dispositif selon l'une des revendications précédentes, **caractérisé en ce que** les contacts de lecture et de masse sont agencés stationnaires dans le support de contact.

13. Dispositif selon l'une des revendications précédentes, **caractérisé en ce que** le couvercle a un moyen pour réceptionner et maintenir la carte, et maintient ainsi la carte lorsque le couvercle est pivoté.
